# EUROPEAN PATENT SPECIFICATION

(11) **EP 3 792 163 B1**
(45) Date of publication and mention of the grant of the patent: **06.03.2024**
(21) Application number: 19208041.4
(22) Date of filing: 08.11.2019
(51) Int. Cl.: B62D 35/02, B62D 37/02, B62D 35/00

(54) **REVOLVABLE ACTIVE DIFFUSER FOR VEHICLE**
DREHBARER AKTIVER DIFFUSOR FÜR FAHRZEUG
DIFFUSEUR ACTIF TOURNANT POUR VÉHICULE

(30) Priority: 10.09.2019 CN 201910854942; 10.09.2019 CN 201921503859 U
(43) Date of publication of application: 17.03.2021
(73) Proprietor: Yanfeng Plastic Omnium Automotive Exterior Systems Co., Ltd., Shanghai 201805 (CN); Compagnie Plastic Omnium, 69007 Lyon (FR)
(72) Inventor: ZHANG, Chen, SHANGHAI, 201805 (CN); DU, Chunhuan, SHANGHAI, 201805 (CN); GUI, Xiaogang, SHANGHAI, 201805 (CN); XU, Jie, SHANGHAI, 201805 (CN)
(74) Representative: LLR

(56) References cited:
- EP-A2- 0 257 341
- WO-A1-2019/077101
- FR-A1- 2 858 793
- FR-A1- 3 031 719
- US-A1- 2017 050 684
- US-B1- 9 527 535
- US-B1- 9 957 000

## Description

### Technical Field

The present invention relates to the field of vehicles, and specifically, to a revolvable active diffuser for vehicle.

### Background of the Invention

Currently, the problem of environmental pollution becomes more severe, and the national policy imposes stricter regulations on the environment. Vehicles are required to reduce CO₂ emissions. With the increase of the use costs of vehicles, consumers also urgently want to reduce the fuel consumption of vehicles.

To improve aerodynamics performance of the entire vehicle, increase air flow efficiency at the bottom of a vehicle, and satisfy requirements of emission regulations, currently, several measures are mainly taken: reducing a weight of the entire vehicle, reducing rolling resistance or using electric vehicles. However, all these measures more or less cause some adverse consequences. The problem of reducing a weight of the entire vehicle is that the stability of the entire vehicle is not enough and the safety of the vehicle is reduced. The problem of reducing rolling resistance is the increase of tire costs. Although electric vehicles solve the problem of environmental pollution, traveling distance is limited due to the lack of mature technologies.

For example, the document US9527535B1 discloses a variable spoiler device for a rear bumper of a vehicle. However, the movement of the spoiler panel needs a pair of pivotable link mechanism among others and is relatively complicated to actuate and control.

### Summary of the Invention

An objective of the present invention is to provide a revolvable active diffuser for vehicle, to cope with the problem of environmental pollution caused by massive CO₂ emissions from vehicles and the problem of excessive fuel consumption of vehicles in the prior art.

To cope with the foregoing technical problems, the present invention uses the following technical solutions:
A revolvable active diffuser for vehicle is provided and comprises: a diffuser bracket immovably fixed relative to a vehicle body, an electrical motor fixed on the diffuser bracket and a driving rod driven by the electrical motor to rotate. The diffuser further comprises a diffuser inner plate mounted on the diffuser bracket, a middle part of the diffuser inner plate being connected to the driving rod by means of a connecting rod, wherein under the driving of the electrical motor, the diffuser inner plate performs rotation movement relative to the diffuser bracket, so as to form an airflow channel for air to flow between the diffuser inner plate and the diffuser bracket.

In the revolvable active diffuser for vehicle according to the invention, the diffuser inner plate comprises: a baseplate extending horizontally and a flap extending at an angle to the baseplate.

Preferably, in the revolvable active diffuser for vehicle according to the invention, an end of the connecting rod is connected to the driving rod, and the other end is connected to the flap of the diffuser inner plate.

In the revolvable active diffuser for vehicle according to the invention, an edge of the diffuser inner plate is fixed to the diffuser bracket by means of a plurality of fixing shafts and bearing blocks, and the diffuser inner plate takes the fixing shafts as its rotation axis.

Preferably, in the revolvable active diffuser for vehicle according to the invention, an upper part of each bearing block comprises two top plates arranged in parallel, and the two top plates are connected by means of a rib arranged in the center, so as to form a pair of slots which are in a same horizontal plane but respectively extend along opposite directions.

Preferably, in the revolvable active diffuser for vehicle according to the invention, a top plate of the diffuser bracket comprises a plurality of slits for assembling the bearing blocks, and the bearing blocks slide and enter the slits to realize matching of the slots with the top plate of the diffuser bracket.

In the revolvable active diffuser for vehicle according to the invention, the bearing blocks are independently formed with the diffuser bracket.

Preferably, in the revolvable active diffuser for vehicle according to the invention, the diffuser inner plate comprises a baseplate extending horizontally and a flap extending at an angle to the baseplate, and advantageously the fixing shafts are integrally formed with the baseplate.

Preferably, the revolvable active diffuser for vehicle according to the invention further comprises a diffuser outer plate mounted outside of the diffuser inner plate, the diffuser outer plate comprising a flanging extending toward the interior of the diffuser, so as to always overlap to a certain extent with an edge of a rear bumper skin during the rotation movement of the diffuser inner plate.

Preferably, in the revolvable active diffuser for vehicle according to the invention, the diffuser bracket comprises a top plate and advantageously further comprises a mounting plate that is formed on an upper surface of the top plate and is parallel to the top plate. Also, at a bottom end of an anti-collision beam bracket is provided a horizontally extending groove, so that assembling of the diffuser bracket with the anti-collision beam bracket is realized by matching of the mounting plate with the groove.

The revolvable active diffuser for vehicle provided according to the present invention adopts an electrical motor driven mechanism with the combination of the driving rod with the connecting rod, and realizes rotation movement of the diffuser inner plate relative to the diffuser bracket. When the vehicle runs at a relatively high speed, by means of being manually or automatically turned on, an airflow channel for air to flow is formed between the diffuser inner plate and the diffuser bracket, so as to improve aerodynamic performance of the entire vehicle, reduce fuel consumption and CO₂ emissions to meet the requirements of emission regulations, and in the meanwhile ensure the streamline of the bottom of the entire vehicle in a non-running state. The diffuser thus has both practical and aesthetic functions, and also avoids the hidden danger problem brought about by energy saving and emission reduction gained through weight reduction of the vehicle body in the prior art, thereby ensuring the driving safety of the vehicle.

In sum, the present invention provides a revolvable active diffuser for vehicle that improves aerodynamic performance of the entire vehicle, ensures the driving safety of the vehicle, reduces fuel consumption and CO₂ emissions, and has both practical and aesthetic functions.

### Brief Description of the Drawings

FIG. 1 is a schematic illustration of a mounting position of a revolvable active diffuser for vehicle on an entire vehicle according to a preferred embodiment of the present invention;
FIG. 2 is an overall structural view of the revolvable active diffuser for vehicle;
FIG. 3 is a schematic exploded view of the revolvable active diffuser for vehicle shown in FIG. 2;
FIG. 4 is a schematic structural view of a connection relationship of a driving rod, a connecting rod and a diffuser inner plate;
FIG. 5 is a schematic structural view of connecting the diffuser bracket and the diffuser inner plate by means of fixing shafts and bearing blocks;
FIG. 6 is a schematic view of a connection relationship of the diffuser bracket and the bearing blocks;
FIG. 6A is a sectional view along a section line A-A in FIG. 6;
FIG. 7 is a perspective view of the revolvable active diffuser for vehicle assembled with a bumper skin;
FIG. 7A is a sectional view along a section line B-B in FIG. 7 when the revolvable active diffuser for vehicle is in a closing state;
FIG. 7B is a sectional view along a section line B-B in FIG. 7 when the revolvable active diffuser for vehicle is in an opening state; and
FIG. 8 is a schematic diagram of enlarged details of a connection relationship of the revolvable active diffuser for vehicle and an anti-collision beam bracket.

### Detailed Description of Preferred Embodiments

The present invention is further described below with reference to specific embodiments. It should be understood that, the following embodiments are merely used to illustrate the present invention, but are not intended to limit the scope of the present invention.

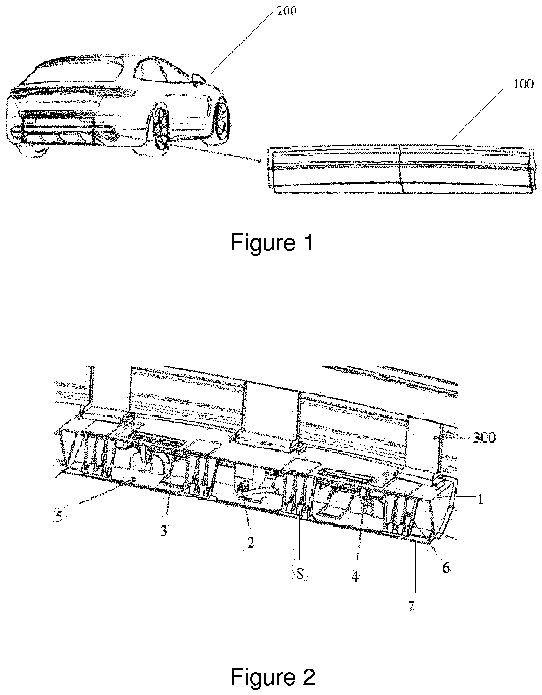

As shown is FIG. 1, a revolvable active diffuser 100 for vehicle according to a preferred embodiment of the present invention is mounted at the rear of a vehicle 200. The diffuser 100 improves aerodynamic performance of the entire vehicle in a high-speed running state, and also ensures the fluency of the bottom of the entire vehicle in a non-running state.

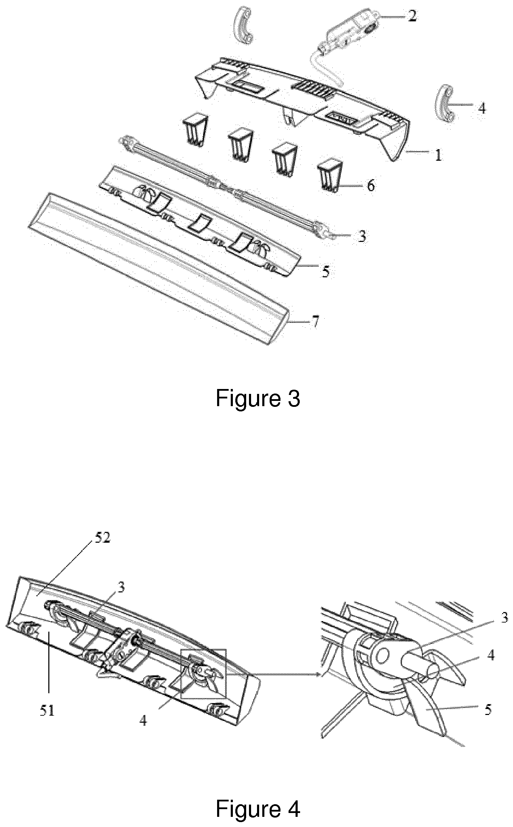

With reference to FIG. 2 and FIG. 3, the revolvable active diffuser 100 mainly includes: a diffuser bracket 1, an electrical motor 2, a driving rod 3, a connecting rod 4, a diffuser inner plate 5, bearing blocks 6 and a diffuser outer plate 7. The diffuser bracket 1 is immovably fixed relative to the body of the vehicle 200. The electrical motor 2 is mounted on the diffuser bracket 1 by means of screws. The driving rod 3 is driven to rotate by the electrical motor. An edge of the diffuser inner plate 5 is fixed to the diffuser bracket 1 by means of fixing shafts 8 and the bearing blocks 6. A middle part of the diffuser inner plate 5 is connected to the driving rod 3 by means of the connecting rod 4.

Therefore, according to this preferred embodiment, under the driving of the electrical motor 2, when rotating in a clockwise direction, the driving rod 3 correspondingly drives, by means of the connecting rod 4, the diffuser inner plate 5 to take the fixing shafts 8 as its rotation axis and perform rotation movement relative to the diffuser bracket 1, so as to form an airflow channel for air to flow between the diffuser inner plate 5 and the diffuser bracket 1. On the contrary, when rotating in a counterclockwise direction, the driving rod 3 correspondingly drives, by means of the connecting rod 4, the diffuser inner plate 5 to take the fixing shafts 8 as its rotation axis and perform rotation movement relative to the diffuser bracket 1, so as to close the airflow channel between the diffuser inner plate 5 and the diffuser bracket 1.

According to a preferred embodiment of the present invention, there are two driving manners of the electrical motor 2. One manner is to manually manipulate an input signal to enable the electrical motor to work. The other manner is that the electrical motor is automatically turned on when a speed sensor detects that a vehicle speed exceeds a particular value (for example, 120 KPH), and automatically turned off when the vehicle speed is less than the particular value.

According to this preferred embodiment, as shown in FIG. 4, the diffuser inner plate 5 includes: a baseplate 51 extending horizontally and a flap 52 extending at an angle to the baseplate 51. An end of the connecting rod 4 is connected to the driving rod 3, and the other end is connected to the flap 52 of the diffuser inner plate 5.

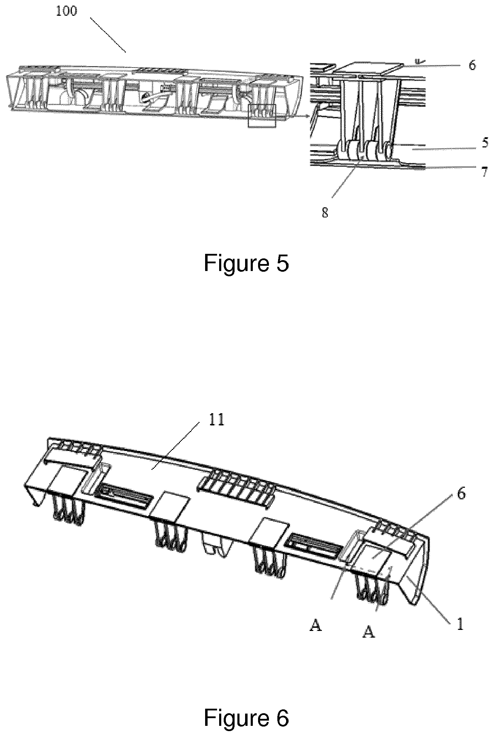

With reference to FIG. 4 and FIG. 5, an edge of the baseplate 51 of the diffuser inner plate 5 is fixed to the diffuser bracket 1 by using four fixing shafts 8 and bearing blocks 6 that are spaced therebetween. The fixing shafts 8 are integrally formed with the baseplate 51 of the diffuser inner plate 5. However, it should be understood that, quantities of the fixing shafts and the bearing blocks may be correspondingly adjusted according to a specific situation, and are not limited to the quantities shown in the figures.

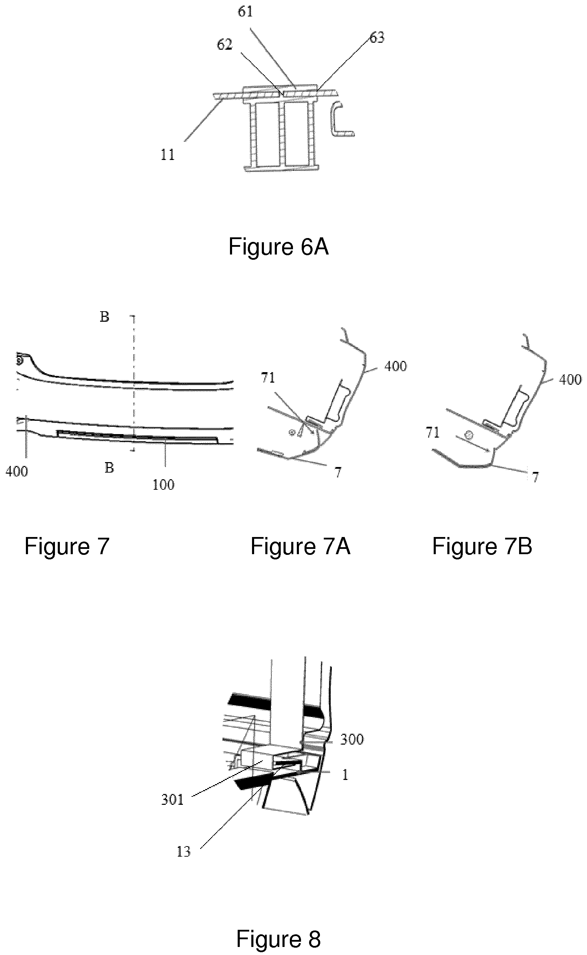

With reference to FIG. 5, FIG. 6 and FIG. 6A, an upper part of a bearing block 6 includes two top plates 61 arranged in parallel. The two top plates 61 are connected by means of a rib 62 arranged in the center, so as to form a pair of slots 63 which are in a same horizontal plane but respectively extend along opposite directions. Correspondingly, a top plate 11 of the diffuser bracket 1 includes a plurality of slits 12 (see FIG. 3) for assembling the bearing blocks 6. Thus, when the bearing blocks 6 slide and enter the slits 12, the top plate 11 on both sides of the slits 12 on the diffuser bracket 1 are respectively clamped into the slots 63, so as to realize assembling in position of the bearing blocks 6 on the diffuser bracket 1.

According to this preferred embodiment, the bearing blocks 6 are independently formed with the diffuser bracket 1. Therefore, the bearing blocks may be separately molded and mounted, and may use a wear-resistant material individually, so as to reduce overall costs.

According to this preferred embodiment, with reference to FIG. 7, FIG. 7A and FIG. 7B, the diffuser outer plate 7 further includes a flanging 71 extending toward the interior of the diffuser, so as to always overlap to a certain extent with an edge of a rear bumper skin 400 during the rotation movement of the diffuser inner plate 5. On one hand, dirt is prevented from entering the diffuser to cause a device fault; on the other hand, the appearance integrity is still taken into account even in an opening state, and no loopholes occur to ensure a good appearance.

According this preferred embodiment, to realize assembling of the revolvable active diffuser 100 for vehicle and an anti-collision beam bracket 300, the diffuser bracket 1 further includes a mounting plate 13 that is formed on an upper surface of the top plate 11 and is parallel to the top plate 11. Correspondingly, at a bottom end of the anti-collision beam bracket 300 is provided a groove structure 301 extending horizontally. Thus, assembling of the revolvable active diffuser 100 for vehicle and the anti-collision beam bracket 300 is realized by inserting the mounting plate 13 on the diffuser bracket 1 into the groove structure 301 on the anti-collision beam bracket 300. The structural design ensures local stiffness of the bumper skin and prevents sinking deformation.

In sum, the revolvable active diffuser 100 for vehicle provided according to the foregoing preferred embodiments improves aerodynamic performance of the entire vehicle at a relatively high running speed, reduces fuel consumption and CO₂ emissions to meet the requirements of emission regulations, and has both practical and aesthetic functions. In the meanwhile, the hidden danger problem brought about by energy saving and emission reduction gained through weight reduction of the vehicle body in the prior art is avoided.

## Claims

1. A revolvable active diffuser for vehicle, comprising a diffuser bracket (1) immovably fixed relative to a vehicle body, an electrical motor (2) fixed on the diffuser bracket and a driving rod (3) driven by the electrical motor to rotate, the diffuser (100) further comprises a diffuser inner plate (5) mounted on the diffuser bracket, a middle part of the diffuser inner plate being connected to the driving rod by means of a connecting rod (4), wherein under the driving of the electrical motor, the diffuser inner plate performs rotation movement relative to the diffuser bracket, so as to form an airflow channel for air to flow between the diffuser inner plate and the diffuser bracket, wherein the diffuser inner plate (5) comprises a baseplate (51) extending horizontally and a flap (52) extending at an angle to the baseplate, wherein an edge of the diffuser inner plate (5) is fixed to the diffuser bracket (1) by means of a plurality of fixing shafts (8) and bearing blocks (6), and the diffuser inner plate takes the fixing shafts as its rotation axis, and wherein the bearing blocks (6) are independently formed with the diffuser bracket (1).

2. The revolvable active diffuser for vehicle according to claim 1, wherein an end of the connecting rod (4) is connected to the driving rod (3), and the other end is connected to the flap (52) of the diffuser inner plate (5).

3. The revolvable active diffuser for vehicle according to any one of claims 1-2, wherein an upper part of each bearing block (6) comprises two top plates (61) arranged in parallel, and the two top plates are connected by means of a rib (62) arranged in the center, so as to form a pair of slots (63) which are in a same horizontal plane but respectively extend along opposite directions.

4. The revolvable active diffuser for vehicle according to any one of claims 1-3, wherein a top plate (11) of the diffuser bracket (1) comprises a plurality of slits (12) for assembling the bearing blocks (6), and the bearing blocks slide and enter the slits to realize matching of the slots (63) with the top plate (11) of the diffuser bracket.

5. The revolvable active diffuser for vehicle according to any one of claims 1-4, wherein the fixing shafts (8) are integrally formed with the baseplate (51).

6. The revolvable active diffuser for vehicle according to any one of claims 1-5, further comprising a diffuser outer plate (7) mounted outside of the diffuser inner plate (5), the diffuser outer plate comprising a flanging (71) extending toward the interior of the diffuser (100), so as to always overlap to a certain extent with an edge of a rear bumper skin (400) during the rotation movement of the diffuser inner plate (5).

7. The revolvable active diffuser for vehicle according to any one of claims 1-6, wherein the diffuser bracket (1) further comprises a top plate (11) and a mounting plate (13) that is formed on an upper surface of the top plate (11) and is parallel to the top plate, and at a bottom end of an anti-collision beam bracket (300) is provided a horizontally extending groove (301), so that assembling of the diffuser bracket (1) with the anti-collision beam bracket (300) is realized by matching of the mounting plate (13) with the groove (301).

## Patentansprüche

1. Drehbarer aktiver Diffusor für ein Fahrzeug, aufweisend einen Diffusorträger (1), der relativ zu einer Fahrzeugkarosserie unbeweglich befestigt ist, einen Elektromotor (2), der an dem Diffusorträger befestigt ist, und eine Antriebsstange (3), die von dem Elektromotor angetrieben wird, um sich zu drehen, wobei der Diffusor (100) ferner eine innere Diffusorplatte (5) aufweist, die an dem Diffusorträger angebracht ist, wobei ein mittlerer Teil der inneren Diffusorplatte mit der Antriebsstange mittels einer Verbindungsstange (4) verbunden ist, wobei die innere Diffusorplatte unter dem Antrieb des Elektromotors eine Drehbewegung relativ zu dem Diffusorträger ausführt, wobei die innere Diffusorplatte (5) eine sich horizontal erstreckende Grundplatte (51) und eine sich in einem Winkel zu der Grundplatte erstreckende Kappe (52) aufweist, um einen Luftströmungskanal für die Luft zu bilden, die zwischen der inneren Diffusorplatte und dem Diffusorträger strömt, wobei ein Rand der inneren Diffusorplatte (5) mittels mehrerer Befestigungswellen (8) und Lagerböcke (6) an dem Diffusorträger (1) befestigt ist und die innere Diffusorplatte die Befestigungswellen als Drehachse nimmt, und wobei die Lagerböcke (6) unabhängig mit dem Diffusorträger (1) ausgebildet sind.

2. Drehbarer aktiver Diffusor für ein Fahrzeug nach Anspruch 1, wobei ein Ende der Verbindungsstange (4) mit der Antriebsstange (3) und das andere Ende mit der Kappe (52) der inneren Diffusorplatte (5) verbunden ist.

3. Drehbarer aktiver Diffusor für ein Fahrzeug nach einem der Ansprüche 1 bis 3, wobei ein oberer Teil jedes Lagerblocks (6) zwei parallel angeordnete Deckplatten (61) aufweist und die beiden Deckplatten mittels einer in der Mitte angeordneten Rippe (62) verbunden sind, um ein Paar Schlitze (63) zu bilden, die in derselben horizontalen Ebene liegen, sich aber jeweils in entgegengesetzte Richtungen erstrecken.

4. Drehbarer aktiver Diffusor für ein Fahrzeug nach einem der Ansprüche 1 bis 3, wobei eine obere Platte (11) des Diffusorträgers (1) eine Vielzahl von Schlitzen (12) zur Montage der Lagerblöcke (6) aufweist und wobei die Lagerblöcke gleiten und in die Schlitze eintreten, um eine Anpassung der Schlitze (63) an die obere Platte (11) des Diffusorträgers zu realisieren.

5. Drehbarer aktiver Diffusor für ein Fahrzeug nach einem der Ansprüche 1 bis 4, wobei die Befestigungswellen (8) einstückig mit der Grundplatte (51) ausgebildet sind.

6. Drehbarer aktiver Diffusor für ein Fahrzeug nach einem der Ansprüche 1 bis 5, der ferner eine äußere Diffusorplatte (7) aufweist, die außerhalb der inneren Diffusorplatte (5) angebracht ist, wobei die äußere Diffusorplatte einen Rand (71) aufweist, der sich in das Innere des Diffusors (100) erstreckt, so dass er während der Drehbewegung der inneren Diffusorplatte (5) immer bis zu einem gewissen Grad mit einer Kante einer hinteren Stoßfängerhaut (400) überlappt.

7. Drehbarer aktiver Diffusor für ein Fahrzeug nach einem der Ansprüche 1 bis 6, wobei der Diffusorträger (1) ferner eine obere Platte (11) und eine Montageplatte (13) aufweist, die an einer oberen Fläche der oberen Platte (11) ausgebildet ist und parallel zu der oberen Platte verläuft, und an einem unteren Ende einer Antikollisionsbalkenhalterung (300) eine sich horizontal erstreckende Nut (301) vorgesehen ist, so dass der Zusammenbau des Diffusorträgers (1) mit der Antikollisionsbalkenhalterung (300) durch Anpassen der Montageplatte (13) an die Nut (301) realisiert wird.

## Revendications

1. Diffuseur actif rotatif pour véhicule, comprenant un support de diffuseur (1) fixé de manière immobile par rapport à la carrosserie d'un véhicule, un moteur électrique (2) fixé sur le support de diffuseur et une tige d'entraînement (3) entraînée par le moteur électrique pour tourner, le diffuseur (100) comprenant en outre un panneau intérieur de diffuseur (5) montée sur le support de diffuseur, une partie centrale du panneau intérieur de diffuseur étant reliée à la tige d'entraînement au moyen d'une bielle (4), dans lequel sous l'entraînement du moteur électrique, le panneau intérieur de diffuseur effectue un mouvement de rotation par rapport au support de diffuseur, de manière à former un canal de circulation d'air pour que l'air circule entre le panneau intérieur de diffuseur et le support de diffuseur, dans lequel le panneau intérieur de diffuseur (5) comprend une plaque de fond (51) s'étendant horizontalement et un volet (52) s'étendant avec un angle par rapport à la plaque de fond, dans lequel un bord du panneau intérieur de diffuseur (5) est fixé au support de diffuseur (1) au moyen d'une pluralité d'arbres de fixation (8) et de sièges de roulement (6), et le panneau intérieur de diffuseur utilise les arbres de fixation comme son axe de rotation, et dans lequel les sièges de roulement (6) sont formés indépendamment du support de diffuseur (1).

2. Diffuseur actif rotatif pour véhicule selon la revendication 1, dans lequel une extrémité de la bielle (4) est reliée à la tige d'entraînement (3) et l'autre extrémité est reliée au volet (52) du panneau intérieur de diffuseur (5).

3. Diffuseur actif rotatif pour véhicule selon l'une quelconque des revendications 1 à 2, dans lequel une partie supérieure de chaque siège de roulement (6) comprend deux plaques supérieures (61) disposées en parallèle, et les deux plaques supérieures sont reliées au moyen d'une nervure (62) disposée au milieu, de manière à former une paire de fentes (63) qui se trouvent dans un même plan horizontal mais s'étendent respectivement dans des directions opposées.

4. Diffuseur actif rotatif pour véhicule selon l'une quelconque des revendications 1 à 3, dans lequel une plaque supérieure (11) du support de diffuseur (1) comprend une pluralité de crans (12) pour assembler les sièges de roulement (6), et les sièges de roulement coulissent et entrent dans les crans pour réaliser l'engagement des fentes (63) avec la plaque supérieure (11) du support de diffuseur.

5. Diffuseur actif rotatif pour véhicule selon l'une quelconque des revendications 1 à 4, dans lequel les arbres de fixation (8) et la plaque de fond (51) sont formés d'un seul tenant.

6. Diffuseur actif rotatif pour véhicule selon l'une quelconque des revendications 1 à 5, comprenant en outre un panneau extérieur de diffuseur (7) montée à l'extérieur du panneau intérieur de diffuseur (5), le panneau extérieur de diffuseur comprenant une bride (71) s'étendant vers l'intérieur du diffuseur (100), de manière à toujours chevaucher dans une certaine mesure un bord d'une peau de pare-chocs arrière (400) lors du mouvement de rotation du panneau intérieur de diffuseur (5).

7. Diffuseur actif rotatif pour véhicule selon l'une quelconque des revendications 1 à 6, dans lequel le support de diffuseur (1) comprend en outre une plaque supérieure (11) et une plaque de montage (13) qui est formée sur une surface supérieure de la plaque supérieure (11) et est parallèle à la plaque supérieure, et une rainure (301) s'étendant horizontalement est prévue sur une extrémité inférieure d'un support de poutre anti-collision (300), de sorte que l'assemblage du support de diffuseur (1) avec le support de poutre anti-collision (300) soit réalisé en faisant engager la plaque de montage (13) dans la rainure (301).
